# EUROPEAN PATENT APPLICATION

(11) **EP 4 180 738 A1**
(43) Date of publication of application: **17.05.2023**
(21) Application number: 21835938.8
(22) Date of filing: 25.02.2021
(51) Int. Cl.: F24F 13/20, F16B 5/00

(54) **MODULE-CONNECTING SYSTEM**

(30) Priority: 08.07.2020 ES 202030699
(71) Applicant: Soler & Palau Research, S.L., 08150 Parets del Vallés (Barcelona) (ES)
(72) Inventor: GIRAO ROIG, Javier, 08150 Parets del Vallès (Barcelona) (ES)
(74) Representative: Evens, Paul Jonathan
(86) International application number: PCT/ES2021/070134
(87) International publication number: WO 2022/008765

(57) **Abstract**

The present invention relates to a system for connecting an accessory module (2) to a main module (1), said modules (1, 2) being formed by metal panels (3), which comprises at least one connection device (4) that can be internally attached in a sliding manner to an upper panel (3.1) of the accessory module (2) by means of at least one rail (5) of the connection device (4) that is related to an attachment part (6) that is attached to the accessory module (2) perpendicularly to the rail (5) to provide a guide; the connection device (4) comprising at least one lateral slot (7) for receiving a connection bolt (8) anchored to the main module (1), and the connection device (4) comprising a drive element (9) accessible from the front panel (3.2) of the accessory module (2) in such a manner that the guided movement of the connection device (4) is achieved by means of the rail (5) for connecting both modules (1 and 2).

## Description

### Technical field

The present invention is related to the systems for connecting accessory modules, and more specifically to the connection of accessory modules to a main module that are common in the ventilation and air conditioning sector.

### State of the art

In the field of air treatment, such as air conditioning and ventilation, it is common to use a main unit or module in the installation, such as a UTBS air treatment unit or, for example, a heat recovery unit to which, depending on the installation, additional elements such as filters or batteries must be added to complete the installation depending on the requirements thereof.

At present, there are known systems for connecting between the different modules that use aluminium profiles for attaching thereof to which external brackets are anchored that are arranged in the corners of the modules to provide the attachment of the accessory modules to the main module. In this way a strong and secure connection is achieved.

However, this type of attachments are normally only attached at the corners of the modules, so that in this type of equipment, as the dimensions thereof are large and as a result of its weight, there is a certain buckling that results in small gaps that do not ensure the tightness, which can cause the system to lose pressure and worsen its performance.

Another solution used for the connection of this type of modules is the use of attachments by way of clasps which, by means of the attachment thereof to the aluminium profiles, enable the modules to be connected and centred. This type of attachment accessories can be used both internally and externally.

However, these types of installations are usually located in high places within a false ceiling, which makes installation not easy, in addition to increasing the dimensions of the module due to the use of the profiles together with the dimensions of the clasps, thus making it difficult or preventing the installation thereof in reduced spaces.

In view of the described drawbacks or limitations of currently existing solutions, a solution is required that enables these modules to be connected together in a simple and compact way, while providing a safe tightness to the installation.

### Object of the invention

In order to meet this objective and solve the technical problems discussed so far, in addition to providing additional advantages that can be derived later, the present invention provides a system for connecting an accessory module to a main module for ventilation systems or air conditioning, said modules being made up of metal panels. Said connection system comprises a connection device that can be internally attached in a sliding manner to an upper panel of the accessory module by means of at least one rail of the connection device that is related to an attachment part that is attached to the accessory module perpendicularly to the rail to provide a guide; the connection device comprising at least one lateral slot configured for receiving the head of a connection bolt anchored to the side of the main module, and the connection system comprising a drive element accessible from the front panel of the accessory module in such a manner that when acting on the drive element, the guided movement of the connection device is achieved by means of the rail in order to press the head of the connection bolt against the lateral slot, connecting both modules.

Due to this configuration, it is possible to connect the modules of the installation without the use of profiles, so that it is especially useful for modules in which the panels of the modules serve as the structure of the equipment.

The connection device is placed inside the accessory module such that it is concealed. Given the current tendency to install said modules in increasingly smaller locations, a connection system is thus achieved that does not increase the height dimensions of the modules, enabling the installation thereof in false ceilings with the minimum possible height, being able to leave a greater separation distance with the walls for better cooling and performance of the equipment.

Likewise, this connection system facilitates the connection of the modules both for installations at ground level and on the ceiling, since, only by acting on the drive element, which will preferably be a screw threaded to the connection device, the connection of the modules can be adjusted with a single hand from a single side, preferably from the front panel of the accessory module. And since the drive element is a screw, a controlled movement is achieved, requiring less force for connecting the modules. Thus, the installation tasks are greatly facilitated, even more so when the installation is carried out inside a false ceiling where it is less accessible.

By acting on the threaded screw from the front panel, the connection device is displaced towards the front panel and by interaction of the rail of the connection device with the attachment part that is connected to the upper panel of the accessory module, a guided sliding is produced that derives in the displacement of the connection device in a direction perpendicular to the plane of connection of the modules, pressing the head of the connection bolt anchored to the main module to thus approach both modules.

Therefore, a reliable connection is achieved with this connection system, which facilitates assembly and positioning, and ensures the tightness of the installation, facilitating the subsequent maintenance of the installation.

According to one embodiment, the rail of the connection device is inclined with respect to the direction of actuation of the drive element, so that it is arranged in a plane parallel to the upper panel of the accessory module, and arranged diagonally with respect to the edge where the upper panel meets the lateral panel to be attached to the accessory module, forming a divergent angle towards the front panel from which the drive screw is accessed.

In this way, when acting from the front panel on the drive screw, it is achieved that the attraction movement of the connection device towards the front panel of the accessory module is transformed into a movement to axially pull the head of the connection bolt to achieve the connection of the modules.

Preferably, said rail with an inclined arrangement has an arched shape, being an arched elongated hole that provides a smoother movement of the system, requiring less effort to be used on the drive screw.

According to one embodiment, the connection device comprises a plurality of rails distributed parallel to the lateral panel of the accessory module and covering the entire width of the lateral panel of the accessory module. In this way it is possible to use a uniformly distributed displacement force along the entire connection of the accessory module. And according to said arrangement, corresponding to each rail, the connection device will have a lateral slot for a corresponding connection bolt.

According to another embodiment, the connection device comprises a plurality of rails arranged parallel to said longitudinal distribution that is parallel to the lateral panel of the accessory module. Thus, there are two or more rows of guide rails that provide a smoother and safer connection displacement.

It is also contemplated that for the connection of both modules, the accessory module comprises an opening in the lateral panel configured so that the connection bolt can access the lateral slot of the connection system. Similarly, for access to the drive element or screw, the front panel of the accessory module comprises a slot through which said drive screw passes, preferably in the form of an elongated hole, in such a manner that, with the displacement of the connection device in the direction of connection of both modules, the screw can be displaced in conjunction with the connection device without abutting against the front panel.

It is also contemplated that the accessory module comprises more than one connection system, preferably one connection device being able to be placed in the upper portion and another one in the lower portion of the accessory module, the main module comprising corresponding connection bolts.

Likewise, said connection bolts can be attached on the other lateral panel of the accessory module so that a train-type installation can be carried out, connecting several modules together.

Finally, it is provided that to ensure the tightness a gasket is placed between the modules to be connected, so that said gasket is pressed during the connection, eliminating possible air leaks.

### Description of the figures

Figure 1 shows a schematic exploded perspective view of the system for connecting modules of the invention, which partially represents the accessory module for better clarity.
Figure 2 shows a perspective view of a cross section of the connection system in which the head of the connection bolt can be seen at the moment of penetrating the lateral slot of the connection device before dropping the accessory module.
Figure 3 shows the same perspective view of the previous cross section, in this case with the accessory module at the same level as the main module before proceeding with the connection displacement for connecting both modules.
Figure 4 shows a perspective view, in which the panels of the accessory module are not shown for better viewing, and with the connection system before actuating to connect the modules.
Figure 5 shows a view like the previous one with the connection system in its final displacement position, in which both modules remain connected.
Figure 6 shows a cross sectional view in which the connection system can be seen with the connection bolt already inside the lateral slot of the connection device, and with said system in a position prior to the connection displacement for connecting the modules.
Figure 7 shows a cross sectional view like the previous one with the connection system in the final position for connecting the modules.
Figure 8 shows a general schematic perspective view of an accessory module before the connection thereof to the main module, with a detailed cross section on the upper panel of the accessory module for better viewing of the connection device.

### Detailed description of the invention

In light of the aforementioned figures, and in accordance with the adopted numbering, one may observe therein a preferred exemplary embodiment of the invention, which comprises the parts and elements indicated and described in detail below.

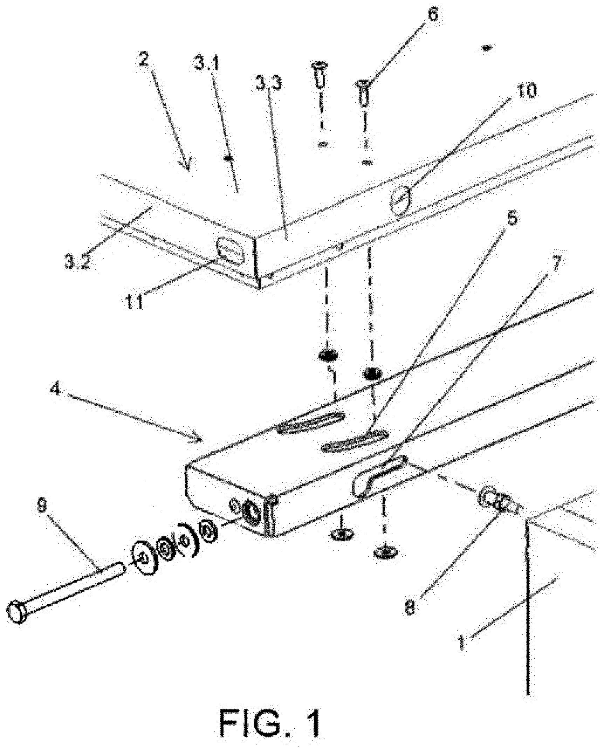

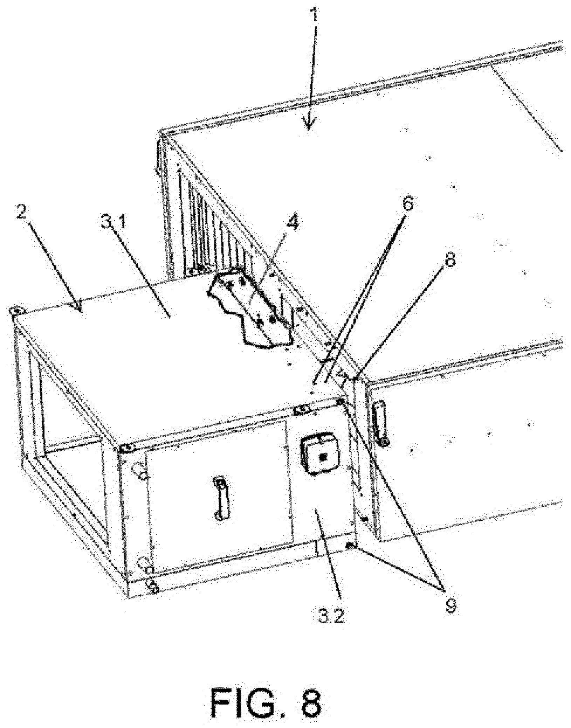

Figure 1 shows a system for connecting an accessory module (2) to a main module (1) with the elements that make it up, so that the connection of, for example, a main module (1) of a heat recovery unit to which an accessory module (2) must be attached, such as a battery, is produced, as can be seen in the general view of figure 8.

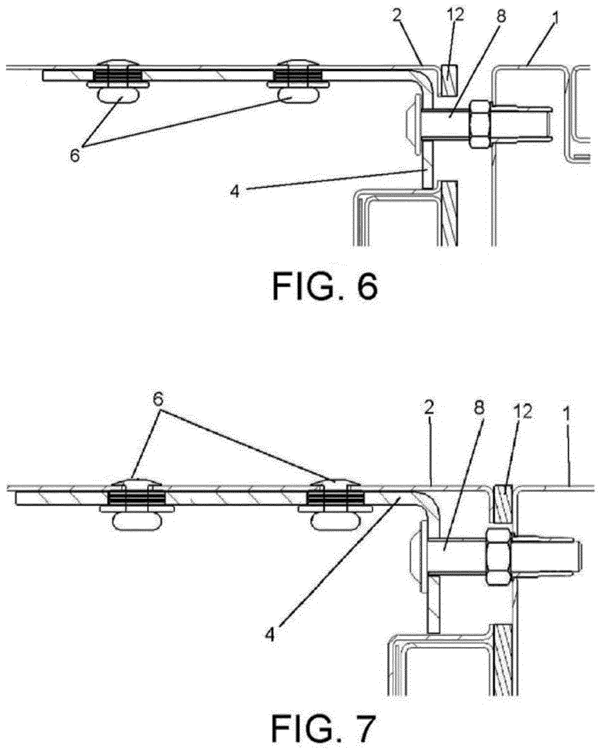

Thus, according to the practical embodiment shown in the figures, the connection system object of the invention comprises a connection device (4) that is installed internally to the accessory module (2), preferably as can be seen in figure 8, assembling a connection device (4) in the upper portion of the accessory module (2), as can be seen in the detailed cross section of said figure 8, and another one in the lower portion of the accessory module (2), not being shown but with the screw drive (9) that interacts therewith being displayed. Once the connection device (4) is assembled, it is attached by means of an attachment part (6) that is attached to the accessory module (2) perpendicularly to a guiding rail (5), said attachment part (6) preferably being rivet-shaped, as can be seen in more detail in figures 6 and 7, so that there is a certain amount of play that allows the connection device (4) to slide through the rail (5), guided by the attachment part (6). According to another embodiment, said attachment part (6) can be in the form of a bolt that is attached to the accessory module (2) as long as it enables the connection device to be guided through the rail (5), in this case incorporating an abutment in the accessory module (2) would be required to prevent the vertical displacement of the connection device (4).

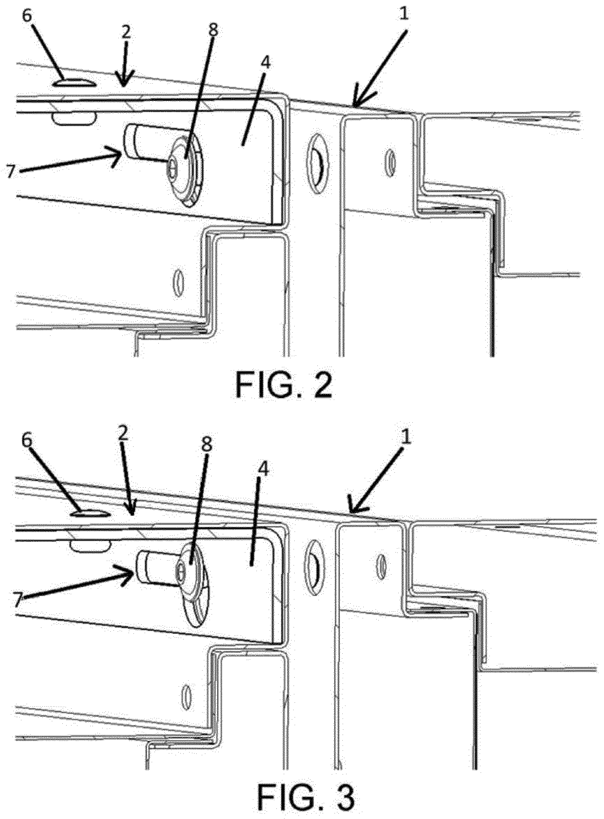

Once the connection device (4) has been attached to the accessory module (2) for assembly in the installation, firstly, a lateral groove (7) receives the head of a connection bolt (8), so that in a first instant, as can be seen in Figure 2, the accessory module (2) is raised a few millimetres above the level of the main module (1). Preferably, the slot (7) comprises an initial opening with a circumference slightly larger than that of the head of the connection bolt (8), so as to allow the easy insertion thereof, and after the initial opening the lateral slot (7) is preferably in the form of an elongated hole with a width equivalent to the neck of the connection bolt (8), such that the head of the connection bolt (8) presses against both the upper and lower portion of the slot (7). As can be seen in Figure 1, in order for the connection bolt (8) to access the slot (7), the lateral panel (3.3) of the accessory module (2) comprises a window (10) for passage.

At this time, the operator can drop the accessory module (2) so that it is held by the head of the connection bolt (8) by way of an anti-tipper, as can be seen in figure 3, wherein the head of the connection bolt (8) has been inserted into the elongated hole in the lateral slot (7).

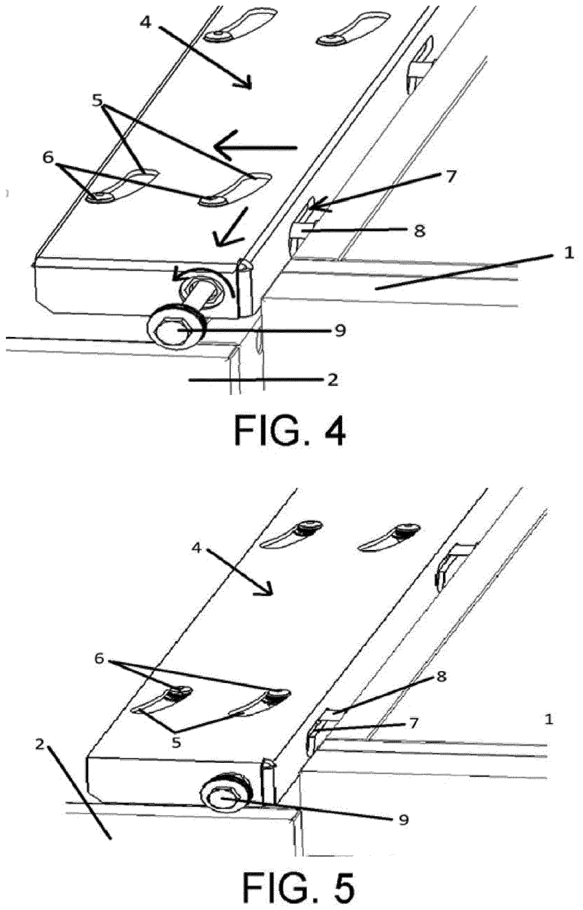

Figure 4 shows how the connection device (4) of the connection system is arranged in an initial position prior to the connection displacement, in which the attachment parts (6) are arranged at the beginning of the stroke of each guide rail (5).

At this time, in order to proceed with the connection of both modules (1, 2), it is only required to actuate the drive element (9) which preferably, as can be seen in the figures, is in the form of a screw that is arranged threaded to a front portion of the connection device (4) that is parallel to the front panel (3.2) of the accessory module (2). Therefore, by establishing a rotation in the corresponding direction, as indicated in figure 4, an attraction displacement of the coupling device (4) is exerted in the axial direction of the drive element (9), which in conjunction with the guiding of the rail (5) in the form of an arched elongated hole, transforms said displacement into a movement perpendicular to said direction and in the direction of connection of both modules (1, 2), as reflected by the arrows in figure 4.

In a first step, the modules (1,2) are arranged as can be seen in the section of Figure 6 in an initial position prior to displacement, and in a second step, once the connection displacement has been established, the connection system moves to a final position as shown in figures 5 and 7, in which the accessory module (2) is completely connected along the entire horizontal dimension thereof to the main module (1), both at the upper portion and the lower portion thereof.

Between both modules (1, 2) a weather strip (12) is provided that acts by way of a gasket to ensure tightness. Such that the weather strip (12) is positioned around the entire perimeter of the accessory module (2) before the connection, and when the connection with the main module (1) is produced, the weather strip (12) is pressed, reducing the dimension thereof and thus ensuring the tightness avoiding gaps or openings.

At this time, both modules (1, 2) would be completely connected in a simple manner, only acting from the front panel (3.2) of the accessory module, only requiring the use of one hand, which facilitates assembly work in small places and at height.

If the installation required more accessory modules to be added, the same manner of proceeding would be carried out by using the connection system object of the invention, so that the accessory module (2), on its other lateral panel opposite to the lateral panel (3.3) for connecting to the main module (1), will have connection bolts (8) which are fixed in correspondence with the lateral slots (7) of the next accessory module which could be an additional filter in this case. So that with this connection system it is possible to carry out a train-type installation, connecting one accessory module (2) after another.

## Claims

1. A system for connecting an accessory module (2) to a main module (1) for ventilation or air conditioning systems, said modules (1, 2) being formed by metal panels (3), **characterised in that** it comprises at least one connection device (4) that can be internally attached in a sliding manner to an upper panel (3.1) of the accessory module (2) by means of at least one rail (5) of the connection device (4) that is related to an attachment part (6) that is attached to the accessory module (2) perpendicularly to the rail (5) to provide a guide; the connection device (4) comprising at least one lateral slot (7) configured for receiving the head of a connection bolt (8) anchored to the side of the main module (1), and the connection system comprising a drive element (9) accessible from the front panel (3.2) of the accessory module (2) in such a manner that when acting on the drive element (9) the guided movement of the connection device (4) is achieved by means of the rail (5) in order to press the head of the connection bolt (8) against the lateral slot (7) in the direction of connection of both modules (1 and 2).

2. The system for connecting an accessory module (2) to a main module (1) according to claim 1, **characterised in that** the rail (5) is inclined with respect to the direction of actuation of the drive element (9).

3. The system for connecting an accessory module (2) to a main module (1) according to the preceding claim, **characterised in that** the rail (5) has an arched shape.

4. The system for connecting an accessory module (2) to a main module (1) according to any one of the preceding claims, **characterised in that** the drive element (9) is a screw threaded to the front portion of the connection device (4).

5. The system for connecting an accessory module (2) to a main module (1) according to any one of the preceding claims, **characterised in that** the connection device comprises a plurality of rails (5) distributed parallel to a lateral panel (3.3) of the accessory module (2).
